# EUROPEAN PATENT APPLICATION

(11) **EP 4 249 294 A1**
(43) Date of publication of application: **27.09.2023**
(21) Application number: 20962344.6
(22) Date of filing: 09.12.2020
(51) Int. Cl.: B60G 3/18

(54) **STABILISING DEVICE**

(30) Priority: 20.11.2020 ES 202031165
(71) Applicant: Azaña Perez, Samuel, 13194 Retuerta del Bullaque Ciudad Real (ES)
(72) Inventor: Azaña Perez, Samuel, 13194 Retuerta del Bullaque Ciudad Real (ES)
(74) Representative: Ungria López, Javier
(86) International application number: PCT/IB2020/061679
(87) International publication number: WO 2022/106882

(57) **Abstract**

The present invention relates to a stabilising device for vehicles having at least one wheel, such that the suspension comprises a system for converting horizontal forces into vertical forces.

## Description

### TECHNICAL FIELD

The present application relates to a stabilising device for vehicles which improves stability in curves or during acceleration of vehicles with two or more wheels. It is a highly efficient self-levelling stabilising system.

It is applicable in the automotive industry.

### STATE OF THE ART

Vehicles that experience accelerations, either longitudinally (braking or acceleration) or transversely (curves), usually experience a tilt due to the inertia of the chassis and the rest of the elements. When they also have a suspension system, a rocking occurs that is partially slowed by shock absorbers.

Tilting also occurs when the terrain is sloped or uneven.

Suspension systems are essential for the proper functioning of a vehicle, since they have the benefits of greater tyre grip to the ground when adapting to the unevenness of the terrain, improved vehicle comfort and better performance, among many others. This is the reason that almost all vehicles have suspensions installed, despite the aforementioned drawbacks.

The product that is most commonly used nowadays to stabilise vehicles is the torsion bar or stabiliser bar. This bar joins the two ends of an axle suspension system and makes them work simultaneously, such that when one side receives a load, the stabiliser bar distributes the load between both sides, equalising them. This system is problematic when the rocking is due to unevenness in the terrain, which is why the transmissible load is usually limited, reducing effectiveness thereof.

Other suspension systems use complex mechanisms to measure the height of the suspension and correct it using power from the vehicle's engine or from another source. One example is hydropneumatic suspension. These systems are complex and have a relatively long reaction time.

The applicant is not aware of any system that solves these problems.

### BRIEF EXPLANATION OF THE INVENTION

The invention consists of a stabilising device for vehicles according to the first claim. The different variants thereof solve the aforementioned problems.

The device makes it possible to use the transverse and longitudinal forces that occur in vehicles to correct the rocking thereof in the corresponding direction.

Longitudinal rocking (front-back) and lateral or transverse rocking (perpendicular to longitudinal rocking) is compensated by longitudinal forces from acceleration or braking, or transverse forces against the ground.

In this specification, elements will be defined as "vertical", but it must be considered that an oblique element, with more than a 45° angle with respect to the horizontal, is also applicable.

It is a system that can overcompensate for the rocking, allowing the vehicle to tilt in the opposite direction, mainly on curves, in a way similar to a motorcycle.

In addition, each device is independent from the others, and thus one wheel is entirely independent in the movement thereof with respect to the other wheels. This improves the operation of the suspension both in terms of performance and comfort. It is also independent from the operation of the shock absorbers...

It allows for greater traction of the tyres, since horizontal force is converted to vertical force, or to a force that is mainly vertical.

Specifically, the stabilising device is designed for vehicles with two or more wheels having a longitudinal shaft and comprising a chassis and a suspension. This suspension has a lower structure (usually a trapezoid) and an upper structure (usually a triangle) that support a wheel supporting steering knuckle.

In a preferred embodiment, the device can be formed by a mechanical system between the suspension and the chassis or between the suspension and the steering knuckle, formed by a lower rocker arm which:
is fixed to the chassis or to the steering knuckle by the longitudinal shaft thereof,
is fixed at the outside thereof, which surrounds the longitudinal shaft, and eccentrically to the lower structure,
is fixed, also eccentrically, to a partially vertical tie rod connecting to the upper structure. The joint between the lower rocker arm and the tie rod is rotated a certain number of degrees with respect to the connection to the lower structure.

The mechanical system can further comprise an upper rocker arm parallel to the lower rocker arm and fixed to the chassis or to the steering knuckle and eccentrically to the upper structure. The lower structure is attached to the upper rocker arm by an auxiliary tie rod, also at an angle to the connection of the upper structure to the upper rocker arm.

In a second embodiment, compatible with the first, the device can also be formed by a hydraulic system, also between the suspension and the chassis or between the suspension and the steering knuckle, comprising double-acting hydraulic cylinders:
one or more horizontal cylinders arranged between the lower structure and the chassis or steering knuckle and
one or more vertical or partially vertical cylinders between the chassis or steering knuckle and the upper structure,
the cylinders being connected to each other by couplings to transmit forces with the change of orientation.

The stabiliser can be attached to the chassis in a way that is parallel to the longitudinal direction of the vehicle, transverse or oblique. For example, the angle between that joint and the longitudinal shaft of the vehicle can be less than 45°. In the case of a mechanical system, the joint is parallel to the lower rocker arm.

Other variants are shown in the rest of the specification.

### DESCRIPTION OF THE FIGURES

For a better understanding of the invention, the following figures are included.
Figures 1 and 2 show views of a first embodiment.
Figure 3 shows a view of the other similar embodiment, with two rocker arms, in a folded position.
Figure 4 shows a diagram of a second embodiment.
Figure 5 shows a diagram of a third embodiment.

### EMBODIMENTS OF THE INVENTION

An embodiment of the invention is briefly described below, as an illustrative and non-limiting example thereof.

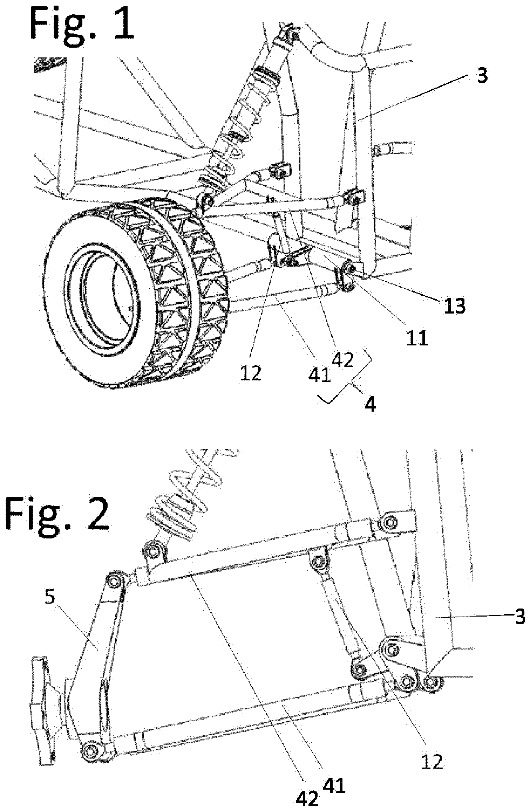

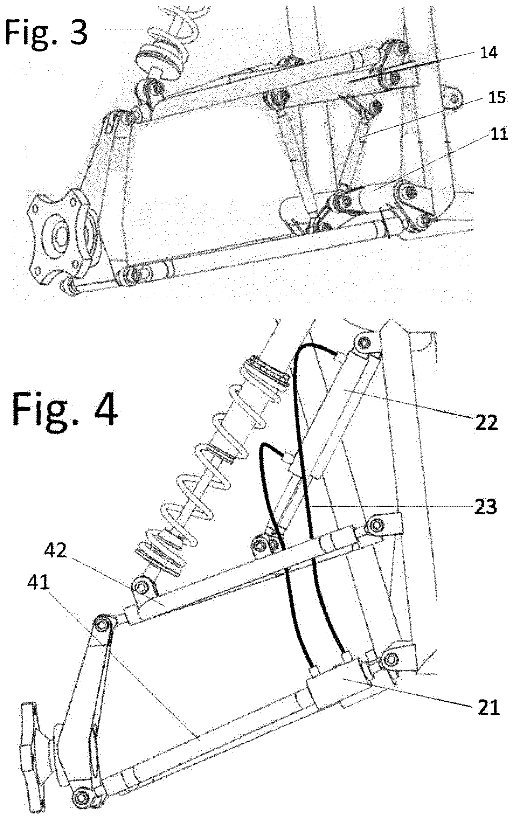

Figures 1-2 show two variants of an embodiment, showing the connection area of a wheel of a vehicle with four or more wheels, with the structure for fixing the same to the chassis. This embodiment has a mechanical system (a hydraulic system in figure 4), represented in extended and retracted positions, according to the figure.

The mechanical system is installed in the articulated joints of the chassis (3) to the suspension (4). It is also possible to install it in the joints of the steering knuckles (5) and the suspension (4), but in this case it is less effective since the weight of the suspension increases.

The suspension (4) comprises a lower structure (41), in this case a trapezoid, and an approximately parallel upper structure (42). The upper structure (42) shown is a triangle. Both structures (41, 42) support the steering knuckle (5) of the wheel. The joint between the suspension (4) and the chassis (3) is parallel to the joint between the suspension (4) and the steering knuckle (5) to form an articulated parallelogram, as is known in the state of the art.

The mechanical system is configured by a lower rocker arm (11) and a tie rod (12) for each wheel. The longitudinal shaft (13) of the lower rocker arm (11) is joined to the chassis (3) at the ends thereof, while the lower structure (41) is eccentrically joined to the lower rocker arm (11), allowing the rotation thereof. The upper structure (42) is joined to the tie rod (12), which in turn is eccentrically joined to the lower rocker arm (11), in this case at a midpoint, and with a few degrees of difference with respect to the joint between the lower structure (41) and the shaft (13), as can be especially seen in figure 2.

In this way, the lower structure (41) transfers the linear horizontal force to the rocker arm (11), which transforms it into a circular force. Since the lower rocker arm (11) has the joints of the lower structure (41) and the tie rod (12) at different angle degrees, the direction of the force changes, from horizontal to vertical. This vertical force is transferred along the tie rod (12) to the upper structure (42), which corrects the rocking.

In figure 3, the upper structure (42) is also attached to the chassis (3) by means of an upper rocker arm (14), in a very similar way. As such, the lower structure (41) is attached to the upper rocker arm (14) by an auxiliary tie rod (15), also at an angle to the connection of the upper structure (42) to the upper rocker arm (14).

The hydraulic system is made up of double-acting hydraulic cylinders (21, 22) joined together. One or more horizontal cylinders (21) are arranged between the lower structure (41) and the chassis (3) and one or more vertical cylinders (22) between the chassis (3) and the upper structure (42), as shown in figure 4. As can be seen, the cylinders (21, 22) are joined by couplings (23).

In this way, when the horizontal cylinder (21) receives the horizontal linear force, it transfers the same to the vertical cylinder (22) of the upper structure (42) through a coupling (23) as a vertical force, thus correcting the rocking. The stronger the horizontal force, the more it will be oriented vertically, such that this device allows the rocking to be cancelled, or even reversed, since the horizontal (transverse) forces are stronger than the rocking.

To absorb the longitudinal or transverse forces, the angle of connection between the suspension (4) and the chassis (3) or steering knuckle (5) with the longitudinal shaft of the vehicle will vary. In the case of the mechanical system, this joint is fixed by the rocker arms (11,14). If the rocker arms (11,14) are parallel to the shaft, then only transverse forces will be absorbed. If they are perpendicular (motorcycle), the longitudinal forces will be absorbed. At any other angle the forces will be broken down accordingly. For example, if they are placed at a 45° angle, the system uses 50% of the transverse force and 50% of the longitudinal force. In a four-wheeled vehicle, since the lateral rocking of a vehicle is greater than the longitudinal rocking, it is preferable that the angle is closer to the longitudinal direction (less than 45°).

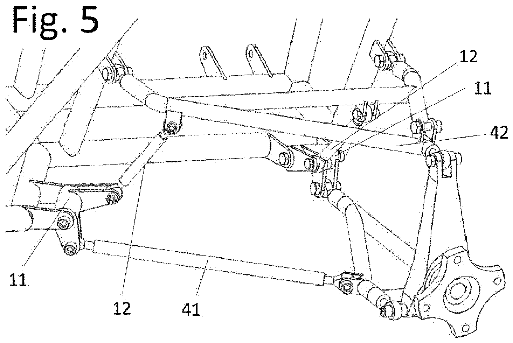

It is also possible to arrange several lower rocker arms (11), each with its own angle. This implies a variation in the structures (41,42) to be able to deform according to the direction of the force (figure 5).

## Claims

1. A stabilising device for vehicles with at least one wheel, **characterised in that** the suspension comprises a converter system for converting horizontal forces into vertical forces.

2. The device according to claim 1, **characterised in that** the converter system comprises
a mechanical system between the suspension (4) and the chassis (3) or the steering knuckle (5), formed by a lower rocker arm (11)
fixed to the chassis (3) or to the steering knuckle (5) by the longitudinal shaft (13) thereof,
eccentrically fixed to the lower structure (41), and
eccentrically fixed to a partially vertical tie rod (12) for connecting to the upper structure (42), the connection to the tie rod (12) being rotated with respect to the connection to the lower structure (41).

3. The device according to claim 1, **characterised in that** the converter system comprises
a hydraulic system comprising double-acting hydraulic cylinders (21, 22):
one or more horizontal cylinders (21) arranged between the lower structure (41) and the chassis (3) or steering knuckle (5) and
one or more vertical or partially vertical cylinders (22) between the chassis (3) or steering knuckle (5) and the upper structure (42),
the cylinders (21, 22) being connected by couplings (23).

4. The device according to claim 2, **characterised in that** the mechanical system additionally comprises an upper rocker arm (14) parallel to the lower rocker arm (11) and fixed to the chassis (3) or to the steering knuckle (5) and eccentrically to the upper structure (42), such that the lower rocker arm (11) is joined to the upper rocker arm (14) by an auxiliary tie rod (15), also at an angle to the connection of the upper structure (42) to the upper rocker arm (14).

5. The device according to claim 1, **characterised in that** the joint between the chassis (3) and the suspension (4) is transverse to the vehicle.

6. The device according to claim 1, **characterised in that** the joint between the chassis (3) and the suspension (4) is longitudinal to the vehicle.

7. The device according to claim 1, **characterised in that** the joint between the chassis (3) and the suspension (4) is oblique to the vehicle.

8. The device according to claim 7, **characterised in that** the angle of the joint between the chassis (3) and the suspension (4) and the longitudinal shaft (13) of the vehicle is less than 45°.
